# EUROPÄISCHE PATENTSCHRIFT

(11) **EP 0 794 408 B1**
(45) Veröffentlichungstag und Bekanntmachung des Hinweises auf die Patenterteilung: **05.03.2008**
(21) Anmeldenummer: 97200205.9
(22) Anmeldetag: 27.01.1997
(51) Int. Cl.: G01C 21/20, G06F 17/30

(54) **Navigationssystem und Fahrzeug mit einem Navigationssystem**
Navigation system and vehicle with a navigation system
Système de navigation et véhicule avec un système de navigation

(30) Priorität: 09.02.1996 DE 19604716
(43) Veröffentlichungstag der Anmeldung: 10.09.1997
(73) Patentinhaber: Siemens VDO Automotive AG, 93055 Regensburg (DE)
(72) Erfinder: Schott, Joachim, 22335 Hamburg (DE); Van Roekel, Jauke, 22335 Hamburg (DE)

(56) Entgegenhaltungen:
- DE-C- 4 412 859
- US-A- 5 416 478

## Beschreibung

Die Erfindung bezieht sich auf ein Navigationssystem mit einem Speicher zur Speicherung von Daten, einer Positionssensor-Einheit zur Bestimmung der Position, einer Steuereinheit, einer Eingabeeinheit, einem Bildspeicher und einem Bildschirm, wobei auf dem Bildschirm wenigstens zwei Darstellungsarten anzeigbar sind, welche von einer Bedienperson mittels der Eingabeeinheit auswählbar sind, wobei eine erste Darstellungsart eine Umgebungskarte der gegenwärtigen Position ist, wobei mittels der Steuereinheit auf dem Bildschirm in der ersten Darstellungsart ein Richtungssymbol anzeigbar ist, das der Bedienperson eine Richtungsinformation übermittelt.

Ein derartiges Navigationssystem ist aus der EP 542 331 A1 bekannt. In diesem bekannten Navigationssystem wird in der ersten Darstellungsart in der Umgebungskarte der bereits zurückgelegte Weg in einer ersten Farbe angezeigt und der noch zurückzulegende Weg in einer zweiten Farbe, wobei der Kontrast zwischen der ersten Farbe und der zweiten Farbe möglichst groß gewählt wird. Um der Bedienperson eine Richtungsinformation zu übermitteln, kann in die Umgebungskarte an der aktuellen Position ein Richtungssymbol angezeigt werden. Um dieses Richtungssymbol auf der Umgebungskarte zu erkennen, muß sich die Bedienperson jedoch zunächst auf der Umgebungskarte orientieren und die gegenwärtige Position auf der Umgebungskarte suchen. Wird das Navigationssystem in einem Fahrzeug eingesetzt, so ist es wünschenswert, den Fahrer bei der Übermittlung der Richtungsinformationen möglichst wenig vom Verkehrsgeschehen abzulenken und daher ist es hinderlich, wenn dieser zunächst auf der Umgebungskarte nach dem Richtungssymbol suchen muß, um die Richtungsinformation wahrzunehmen. Als zweite Darstellungsart ist bei diesem bekannten Navigationssystem eine abstrahierte Darstellung der gegenwärtigen Umgebung vorgesehen.

Es ist Aufgabe der vorliegenden Erfindung, ein Navigationssystem der eingangs genannten Art zu schaffen, welches der Bedienperson einen einfachen und schnellen Zugriff auf die Richtungsinformation ermöglicht.

Diese Aufgabe ist erfindungsgemäß dadurch gelöst, daß das Richtungssymbol in einer vorbestimmbaren Position des Bildschirms angeordnet ist und in der ersten und wenigstens einer weiteren Darstellungsart anzeigbar ist.

Bevor die Bedienperson das Navigationssystem in Betrieb nimmt, kann die Bedienperson bestimmen, an welcher Position des Bildschirmes das Richtungssymbol angezeigt werden soll. Möchte die Bedienperson nun während der Fahrt die Richtungsinformation aufnehmen, so kann sie ihren Blick direkt auf die vorbestimmbare Position des Richtungssymbols richten und die Richtungsinformation erkennen. Es ist nicht erforderlich, daß sich die Bedienperson zunächst auf der Umgebungskarte orientiert und die aktuelle Position sucht. Zusätzlich ist das Richtungssymbol in wenigstens einer weiteren Darstellungsart anzeigbar. Eine solche weitere Darstellungsart könnte z.B. eine Menüdarstellung, eine Darstellung der Entfernung bis zur nächsten Tankstelle, eine Darstellung der aktuellen Außentemperatur oder ähnliches sein. Dadurch wird es der Bedienperson ermöglicht, auch in anderen Darstellungsarten als der Umgebungskarte Richtungsinformationen zu erhalten.

Eine weitere vorteilhafte Ausgestaltung der Erfindung ist dadurch gekennzeichnet, daß auf dem Bildschirm wenigstens eine Darstellungsart anzeigbar ist, die nicht der Navigationsfunktion des Navigationssystems zugeordnet ist, insbesondere eine Darstellungsart für Radiobedienung, Telefonbedienung oder für die Bedienung eines digitalen Signalprozesses, wobei in wenigstens einer dieser nicht der Navigationsfunktion zugeordneten Darstellungsarten das Richtungssymbol anzeigbar ist.

Ein derartiges Navigationssystem ist sehr flexibel und universell einzusetzen. Der Bildschirm kann für die Bedienung eines Radios, eines Telefons oder Ähnlichem verwendet werden, wobei es gleichzeitig möglich ist, Richtungsinformationen mittels des Richtungssymboles zu erhalten.

Eine weitere vorteilhafte Ausgestaltung der Erfindung ist dadurch gekennzeichnet, daß das Richtungssymbol in jeder Darstellungsart anzeigbar ist .

Eine weitere vorteilhafte Ausgestaltung der Erfindung ist dadurch gekennzeichnet, daß das Richtungssymbol in einer Ecke des Bildschirms anzeigbar ist.

Eine Plazierung des Richtungssymbols in einer Ecke des Bildschirmes ist ergonomisch günstig und ermöglicht es der Bedienperson, das Richtungssymbol schnell zu erkennen und die Richtungsinformation schnell aufzunehmen.

Eine weitere vorteilhafte Ausgestaltung der Erfindung ist dadurch gekennzeichnet, daß als zweite Darstellungsart eine abstrahierte Kreuzungsdarstellung vorgesehen ist, die dem Benutzer eine Richtungsinformation übermittelt.

Während das Richtungssymbol nur auf einem relativ kleinen Teil des Bildschirmes, z.B. in einer Ecke des Bildschirmes, angezeigt wird, kann bei der als zweite Darstellungsart vorgesehenen abstrahierten Kreuzungsdarstellung ein großer Teil des Bildschirmes für die abstrahierte Darstellung der Kreuzung benutzt werden und somit der zu fahrende Weg an der komplizierte Kreuzung genauer aufgezeigt werden. Dadurch ist es möglich, bei komplizierten Kreuzungen die Richtungsinformationen sicher und genau an die Bedienperson zu übermitteln. In der Praxis kann in ca. 90% der Fälle die Richtungsinformation mittels des Richtungssymbols genügend genau übermittelt werden. In den restlichen 10% der Fälle kann vorteilhaft die zweite Darstellungsart der abstrahierten Kreuzungsdarstellung eingesetzt werden und der Bedienperson dadurch der zu fahrende Weg an der bevorstehenden komplizierten Kreuzung zweifelsfrei übermittelt werden.

Eine weitere vorteilhafte Ausgestaltung dieser Ausführungsform ist dadurch gekennzeichnet, daß die Bedienperson bei vorbestimmbaren, komplexen Richtungsinformationen in der ersten Darstellungsart mittels visueller oder akustischer Mittel angewiesen wird, auf die zweite Darstellungsart umzuschalten.

Erscheint es bei komplizierten Kreuzungen sinnvoll, der Bedienperson, welche die erste Darstellungsart der Umgebungskarte gewählt hat, die Richtungsinformation bzw. den zu fahrenden Weg an der bevorstehenden komplizierten Kreuzung genauer aufzuzeigen, so wird die Bedienperson mittels der visuellen oder akustischen Mittel darauf hingewiesen, daß sie die aktuelle Richtungsinformation der zweiten Darstellungsart der abstrahierten Kreuzungsdarstellung besser entnehmen kann.

Eine weitere vorteilhafte Ausgestaltung der Erfindung ist dadurch gekennzeichnet, daß in der ersten Darstellungsart bei vorbestimmbaren, komplexen Richtungsinformationen automatisch auf die zweite Darstellungsart umgeschaltet wird.

Es ist auch möglich, daß bei komplizierten Kreuzungen das Navigationssystem automatisch von der ersten Darstellungsart der Umgebungskarte in die zweite Darstellungsart der abstrahierten Kreuzungsdarstellung umschaltet.

Das erfindungsgemäße Navigationssystem kann vorzugsweise in einem Fahrzeug eingesetzt werden.

Eine Ausführungsform der Erfindung wird nachfolgend anhand der Zeichnung in den Figuren 1 bis 5 näher erläutert. Es zeigen:
- Fig. 1: ein Blockschaltbild des Navigationssystems,
- Fig. 2: als erste Darstellungsart eine Umgebungskarte der gegenwärtigen Position, wobei das Richtungssymbol zur Anzeige der Richtungsinformation in der oberen rechten Ecke des Bildschirmes angezeigt wird,
- Fig. 3: als zweite Darstellungsart eine abstrahierte Kreuzungsdarstellung, wobei das Richtungssymbol zusätzlich in der oberen rechten Ecke des Bildschirmes angezeigt wird,
- Fig. 4: als dritte Darstellungsart eine Darstellungsart für die Bedienung eines digitalen Signalprozessors, wobei das Richtungssymbol in der oberen rechten Ecke des Bildschirms angezeigt wird,
- Fig. 5: als vierte Darstellungsart eine Darstellungsart für die Bedienung eines Telefones, wobei das Richtungssymbol in der rechten oberen Ecke des Bildschirmes angezeigt wird.

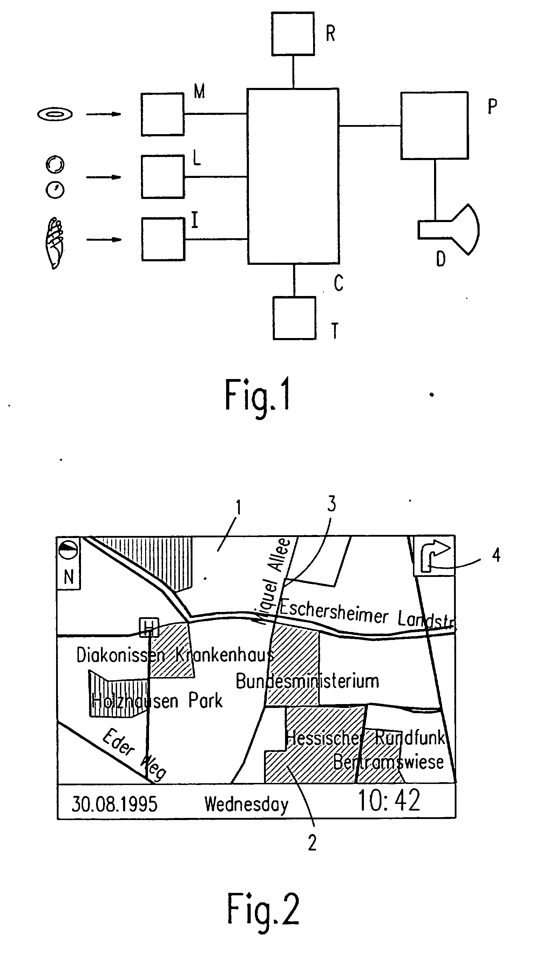

Fig. 1 zeigt ein Navigationssystem für ein Fahrzeug mit einem Speicher M zur Speicherung kartographischer und andersartiger Daten. Das Navigationssystem weist weiter eine Positionssensoreinheit L auf, welche kontinuierlich die Position des Fahrzeugs in Relation zu einer in dem Speicher M abgespeicherten Straßenkarte bestimmt. Die Positionssensoreinheit L kann z.B. Signale eines Satelliten zur Bestimmung der aktuellen Position empfangen, es ist jedoch auch denkbar, daß sie vollständig autonom arbeitet, z.B. auf der Basis von Daten, die von Radsensoren und einem magnetischen Sensor übermittelt werden oder kombiniert oder auf andere Art und Weise. Es ist eine Radioanlage R sowie eine Telefonanlage T vorgesehen.

Das Navigationssystem weist eine Eingabeeinheit I auf, mittels derer von einem Fahrer z.B. die Startposition und die Zielposition eingegeben werden können. Mittels der Eingabeeinheit I können verschiedene Darstellungsarten, welche auf einem Bildschirm D anzeigbar sind, ausgewählt werden. Zudem können in diesen verschiedenen Darstellungsarten Bedienfunktionen ausgeübt werden. So ist es z. B. möglich, die Radioanlage R oder die Telefonanlage T mittels der Eingabeeinheit I zu bedienen, wenn vorher auf die entsprechende Darstellungsart für Radiobedienung bzw. Telefonbedienung umgeschaltet wurde.
Die Navigationseinheit weist eine Steuereinheit C auf, welche den Fahrer bzw. die Bedienperson entlang einer vorbestimmbaren Route auf der Basis von Daten von der Positionssensoreinheit L und der in dem Speicher M gespeicherten kartographischen Daten zu einem Ziel führen kann. Falls gewünscht, kann die Steuereinheit C die Route selbstständig auf der Basis einer von der Bedienperson eingegebenen Startposition und einer von der Bedienperson eingegebenen Zielposition bestimmt werden. Die Steuereinheit C kann in Abhängigkeit von der gegenwärtigen Position des Fahrzeugs, welche von der Positionssensor-Einheit L ermittelt wird, das Speichern von kartographischen Daten in einem Bildspeicher P steuern. Ferner steuert die Steuereinheit C die Anzeige von Richtungsinformationen auf dem Bildschirm D, die Umschaltung zwischen den verschiedenen Darstellungsarten auf dem Bildschirm sowie den gesamten Datenverkehr zwischen der Radioanlage R, der Telefonanlage T, des Speichers M, der Positionssensor-Einheit L, der Eingabeeinheit I sowie des Bildspeichers P und des Bildschirms D.
Die Richtungsinformationen, die den Fahrer über die zu fahrende Richtung z.B. an bevorstehenden Kreuzungen informieren, können wahlweise oder gleichzeitig mittels des Bildschirmes D oder mittels einer nicht dargestellten akustischen Ausgabeeinheit übermittelt werden.

Die Bedienperson kann mittels der Eingabeeinheit I zwischen verschiedenen Darstellungsarten auf dem Bildschirm D wählen.

Eine erste Darstellungsart ist in Fig. 2 dargestellt. Diese Figur 2 zeigt den Bildschirm 1, auf dem als erste Darstellungsart eine Umgebungskarte 2 der gegenwärtigen Position 3 des Fahrzeugs angezeigt wird. In der rechten oberen Ecke des Bildschirms 1 wird ein Richtungssymbol 4 angezeigt, welches dem Fahrer mitteilt, daß er an der nächsten Kreuzung nach rechts abbiegen muß. In dieser Darstellungsart mit der Umgebungskarte 2 kann der Fahrer bei Bedarf erkennen, wo er sich auf der Umgebungskarte 2 befindet. Möchte er jedoch nur kurz wissen, wie er sich bei der nächsten Kreuzung verhalten muß, so genügt es, daß er in die rechte obere Ecke des Bildschirmes 1 schaut und er erkennt sofort, daß er bei der nächsten Kreuzung nach rechts abbiegen muß. Zusätzlich ist es möglich, daß er sich diese Richtungsinformation auch akustisch mittels der nicht dargestellten akustischen Ausgabeeinheit übermitteln läßt.

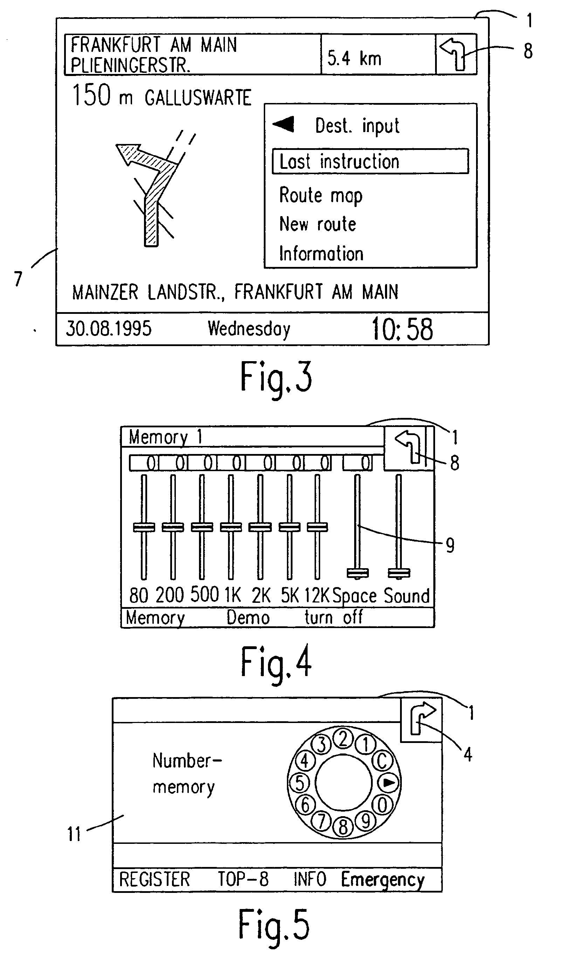

Fig. 3 zeigt als zweite Darstellungsart eine abstrahierte Kreuzungsdarstellung 7, mittels derer bei komplizierten Kreuzungen die Richtungsinformation sicher und genau an den Fahrer übermittelt werden kann. Zusätzlich ist in der rechten oberen Ecke des Bildschirms 1 noch das Richtungssymbol 8 angezeigt. Der Fahrer kann zwischen der ersten Darstellungsart der Umgebungskarte 2 und der zweiten Darstellungsart der abstrahierten Kreuzungsdarstellung 7 mittels der Eingabeeinheit I frei wählen. Bevorzugt der Fahrer die erste Darstellungsart der Umgebungskarte 2, so ist es möglich, daß er z.B. mittels akustischer oder visueller Mittel angewiesen wird, vorzugsweise auf die zweite Darstellungsart der abstrahierten Kreuzungsdarstellung 7 umzuschalten, wenn die aktuelle Richtungsinformation bei komplizierten Kreuzungen mittels des Richtungssymboles 8 nicht genügend deutlich dargestellt werden kann. In der Praxis hat sich gezeigt, daß in ca. 90% der Fälle die für den Fahrer notwendigen Richtungsinformationen mittels des Richtungssymboles 8 genügend deutlich an den Fahrer übermittelt werden können. Nur in ca. 10% der Fälle ist es vorteilhaft, auf die zweite Darstellungsart der abstrahierten Kreuzungsdarstellung 7 umzuschalten.

Fig. 4 zeigt den Bildschirm 1 in einer dritten Darstellungsart 9. Diese dritte Darstellungsart 9 ist für die Bedienung eines digitalen Signalprozessors der Radioanlage R des Fahrzeuges vorgesehen. Die Funktionen des Signalprozessors könnenmittels der Eingabeeinheit I eingestellt werden. Auch in dieser dritten Darstellungsart 9 für die Bedienung eines digitalen Signalprozessors kann der Fahrer die Richtungsinformation visuell mittels des in der rechten oberen Ecke des Bildschirms 1 dargestellten Richtungssymbols 8 aufnehmen.

In der Fig. 5 ist als vierte Darstellungsart 11 eine Darstellung für die Bedienung der Telefonanlage T dargestellt. Auch in dieser vierten Darstellungsart 11 kann der Fahrer die Richtungsinformation mittels des in der rechten oberen Ecke des Bildschirms 1 dargestellten Richtungssymbols 4 visuell aufnehmen.

Die Richtungssymbole 4 und 8 sowie weitere, nicht dargestellte Richtungssymbole (z. B. für den Hinweis "Geradeaus") sind beispielsweise in dem Speicher M gespeichert. Die Auswahl des für die jeweilige Position aktuellen Richtungssymbols wird mittels der Steuereinheit C gesteuert.

## Patentansprüche

1. Navigationssystem mit einem Speicher (M) zur Speicherung von Daten, einer Positionssensor-Einheit (L) zur Bestimmung der Position, einer Steuereinheit (C), einer Eingabeeinheit (I), einem Bildspeicher (P) und einem Bildschirm (D, 1), wobei auf dem Bildschirm (D,1) wenigstens zwei Darstellungsarten anzeigbar sind, welche von einer Bedienperson mittels der Eingabeeinheit (I) auswählbar sind, wobei eine erste Darstellungsart (2) eine Umgebungskarte (2) der gegenwärtigen Position (3) ist,
wobei mittels der Steuereinheit (C) auf dem Bildschirm (1, D) in der ersten Darstellungsart (2) ein Richtungssymbol (4, 8) anzeigbar ist, das der Bedienperson eine Richtungsinformation übermittelt,
**dadurch gekennzeichnet,**
**daß** das Richtungssymbol (4, 8) in einer vorbestimmbaren Position des Bildschirms (D, 1) angeordnet ist und in der ersten (2) und wenigstens einer weiteren Darstellungsart anzeigbar ist.

2. Navigationssystem nach Anspruch 1,
**dadurch gekennzeichnet,**
**daß** auf dem Bildschirm (P, 1) wenigstens eine Darstellungsart (9, 11) anzeigbar ist, die nicht der Navigationsfunktion des Navigationssystems zugeordnet ist, insbesondere eine Darstellungsart für Radiobedienung, Telefonbedienung (11) oder für die Bedienung eines digitalen Signalprozessors (9), wobei in wenigstens einer dieser nicht der Navigationsfunktion zugeordneten Darstellungsarten (9, 11) das Richtungssymbol (4, 8) anzeigbar ist.

3. Navigationssystem nach Anspruch 1 oder 2,
**dadurch gekennzeichnet,**
**daß** das Richtungssymbol (4, 8) in jeder Darstellungsart (2, 7, 9, 11) anzeigbar ist.

4. Navigationssystem nach Anspruch 1, 2 oder 3,
**dadurch gekennzeichnet,**
**daß** das Richtungssymbol (4, 8) in einer Ecke des Bildschirms (D, 1) anzeigbar ist.

5. Navigationssystem nach einem der Ansprüche 1 bis 4,
**dadurch gekennzeichnet,**
**daß** als zweite Darstellungsart (7) eine abstrahierte Kreuzungsdarstellung (7) vorgesehen ist, die der Bedienperson eine Richtungsinformation übermittelt.

6. Navigationssystem nach einem der Ansprüche 1 bis 5,
**dadurch gekennzeichnet,**
**daß** die Bedienperson bei vorbestimmbaren, komplexen Richtungsinformationen in der ersten Darstellungsart (2) mittels visueller oder akustischer Mittel angewiesen wird, auf die zweite Darstellungsart (7) umzuschalten.

7. Navigationssystem nach einem der Ansprüche 1 bis 5,
**dadurch gekennzeichnet,**
**daß** in der ersten Darstellungsart (2) bei vorbestimmbaren, komplexen Richtungsinformationen automatisch auf die zweite Darstellungsart (7) umgeschaltet wird.

8. Fahrzeug mit einem Navigationssystem nach einem der Ansprüche 1 bis 7.

## Claims

1. Navigation system having a memory (M) for storage of data, a position sensor unit (L) for determining the position, a control unit (C), an input unit (I), an image memory (P) and a screen (D, 1), in which case at least two display modes can be displayed on the screen (D, 1) and can be selected by an operator by means of the input unit (I), with a first display mode (2) being a map (2) of the area surrounding the present position (3),
in which a direction symbol (4, 8) which provides the operator with direction information can be displayed by means of the control unit (C) on the screen (1, D) in the first display mode (2),
**characterized**
**in that** the direction symbol (4, 8) is arranged at a predeterminable position on the screen (D, 1) and can be displayed in the first (2) and at least one further display mode.

2. Navigation system according to Claim 1,
**characterized**
**in that** at least one display mode (9, 11) which is not associated with the navigation function of the navigation system can be displayed on the screen (P, 1), in particular a display mode for radio control, television control (11) or for controlling a digital signal processor (9), in which the direction symbol (4, 8) can be displayed in at least one of these display modes (9, 11) which are not associated with the navigation function.

3. Navigation system according to Claim 1 or 2,
**characterized**
**in that** the direction symbol (4, 8) can be displayed in each display mode (2, 7, 9, 11) .

4. Navigation system according to Claim 1, 2 or 3,
**characterized**
**in that** the direction symbol (4, 8) can be displayed in a corner of the screen (D, 1).

5. Navigation system according to one of Claims 1 to 4,
**characterized**
**in that** an abstracted junction display (7), which provides the operator with direction information, is provided as the second display mode (7) .

6. Navigation system according to one of Claims 1 to 5,
**characterized**
**in that** the operator is instructed to switch to the second display mode (7), by means of a visual or audible means, when predeterminable, complex direction information occurs in the first display mode (2).

7. Navigation system according to one of Claims 1 to 5,
**characterized**
**in that** switching to the second display mode (7) takes place automatically when predeterminable, complex direction information occurs in the first display mode (2).

8. Vehicle having a navigation system according to one of Claims 1 to 7.

## Revendications

1. Système de navigation comportant une mémoire (M) destinée au stockage de données, une unité (L) à capteurs de position destinée à déterminer la position, une unité de commande (C), une unité de saisie (I), une mémoire d'images (P) et un écran (D, 1),
où il est possible d'afficher sur l'écran (D, 1) au moins deux modes de représentation qui peuvent être sélectionnés par un opérateur au moyen de l'unité de saisie (I), un premier mode de représentation (2) étant une carte des environs (2) de la position actuelle (3),
où il est possible, au moyen de l'unité de commande (C), d'afficher sur l'écran (1, D), dans le premier mode de représentation (2), un symbole de direction (4, 8) qui communique une information de direction à l'opérateur,
**caractérisé par le fait**
**que** le symbole de direction (4, 8) est placé à un endroit de l'écran (D, 1) pouvant être défini au préalable et qu'il peut être affiché dans le premier mode (2) et au moins dans un autre mode de représentation.

2. Système de navigation selon la revendication 1,
**caractérisé par le fait**
**que**, sur l'écran (D, 1), il est possible d'afficher au moins un mode de représentation (9, 11) qui ne correspond pas à la fonction de navigation du système de navigation, notamment un mode de représentation pour la commande d'un poste radio, d'un téléphone (11) ou pour la commande d'un processeur numérique de signaux (9), le symbole de direction (4, 8) pouvant être affiché dans au moins l'un de ces modes de représentation (9, 11) ne correspondant pas à la fonction de navigation.

3. Système de navigation selon la revendication 1 ou 2,
**caractérisé par le fait**
**que** le symbole de direction (4, 8) peut être affiché dans chaque mode de représentation (2, 7, 9, 11).

4. Système de navigation selon la revendication 1, 2 ou 3,
**caractérisé par le fait**
**que** le symbole de direction (4, 8) peut être affiché dans un coin de l'écran (D, 1).

5. Système de navigation selon l'une des revendications 1 à 4,
**caractérisé par le fait**
**qu'**il est prévu, en tant que deuxième mode de représentation (7), une représentation abstraite des croisements (7) qui communique l'information de direction à l'opérateur.

6. Système de navigation selon l'une des revendications 1 à 5,
**caractérisé par le fait**
**que** l'opérateur est invité, à l'aide de moyens visuels ou acoustiques, dans le cas d'informations de direction complexes pouvant être définies au préalable dans le premier mode de représentation (2), à passer dans le deuxième mode de représentation (7).

7. Système de navigation selon l'une des revendications 1 à 5,
**caractérisé par le fait**
**que**, dans le premier mode de représentation (2), dans le cas d'informations de direction complexes pouvant être définies au préalable, il se produit un passage automatique dans le deuxième mode de représentation (7).

8. Véhicule comportant un système de navigation selon l'une des revendications 1 à 7.
